# EUROPEAN PATENT APPLICATION

(11) **EP 4 525 129 A1**
(43) Date of publication of application: **19.03.2025**
(21) Application number: 23831481.9
(22) Date of filing: 28.06.2023
(51) Int. Cl.: H01M 10/06, H01M 4/14, H01M 4/62

(54) **LEAD-ACID BATTERY**

(30) Priority: 30.06.2022 JP 2022106340
(71) Applicant: GS Yuasa International Ltd., Kisshoin, Minami-ku, Kyoto-shi, Kyoto 601-8520 (JP)
(72) Inventor: KOJIMA Rikio, Kyoto-shi, Kyoto 601-8520 (JP); SEKIYA Kazuki, Kyoto-shi, Kyoto 601-8520 (JP)
(74) Representative: Isarpatent
(86) International application number: PCT/JP2023/023890
(87) International publication number: WO 2024/005041

(57) **Abstract**

A lead-acid battery includes at least one element, an electrolyte solution, and a cell chamber that stores the element and the electrolyte solution. The element includes a positive electrode plate, a negative electrode plate, and a separator interposed between the positive electrode plate and the negative electrode plate. The positive electrode plate includes a positive electrode material containing an Sb element, and has a thickness of 1.70 mm or more. The negative electrode plate includes a negative electrode material. A mass ratio of the positive electrode material to the negative electrode material is 1.2 or more and 1.4 or less.

## Description

### TECHNICAL FIELD

The present invention relates to a lead-acid battery.

### BACKGROUND ART

Lead-acid batteries are in use for various applications, including automotive and industrial applications. A lead-acid battery includes a negative electrode plate, a positive electrode plate, a separator, and an electrolyte solution and the like. Each plate includes a current collector and an electrode material.

Patent Document 1 proposes a lead-acid battery including a negative electrode plate, a positive electrode plate, a separator, and an electrolyte solution, in which a negative electrode material of the negative electrode plate contains graphite, barium sulfate, and carbon black, and has a graphite content of 2.0% by mass or less, a barium sulfate content of 0.6% by mass or more and 3.0% by mass or less, and a carbon black content of 0.1% by mass or more, and a base of the separator has a thickness of 0.15 mm or more and 0.25 mm or less.

Patent Document 2 proposes a lead-acid battery including a negative electrode plate, a positive electrode plate, and an electrolyte solution, in which a negative electrode material of the negative electrode plate contains graphite or carbon fiber, and a ratio N/P of a mass N of the negative electrode material to a mass P of a positive electrode material per the lead-acid battery is 0.62 or more.

Patent Document 3 proposes a lead-acid battery including: a negative electrode plate which includes a negative electrode grid including a negative electrode grid lug and a negative electrode grid rib, and a negative active material filling the negative electrode grid rib; and a positive electrode plate which includes a positive electrode grid including a positive electrode grid lug and a positive electrode grid rib, and a positive active material filling the positive electrode grid rib, in which the lead-acid battery includes: a positive electrode connection member including a positive electrode shelf to which the positive grid lugs are collectively welded, and a positive pole or a positive electrode connection body derived from the positive shelf; and a negative electrode connection member including a negative electrode shelf to which the negative grid lugs are collectively welded, and a negative pole or a negative electrode connection body derived from the negative shelf, the positive electrode grid and the positive electrode connection member is composed of lead or a lead alloy which does not contain Sb, the negative electrode grid and the negative electrode connection member is composed of lead or a lead alloy which does not contain Sb, the negative active material contains a substance having a hydrogen overvoltage lower than that of Pb in the negative active material, a mass ratio of the negative active material and the positive active material which constitute a unit cell is 0.7 to 1.3.

Patent Document 4 proposes a sealed lead-acid battery of a type in which a positive electrode plate, a negative electrode plate and a separator composes an element, an electrolyte solution is held in micropores of the element, and oxygen gas generated from the positive electrode at the final stage of charge is reacted with a negative active material. In the sealed lead-acid battery, the micropores of the positive electrode plate and the negative electrode plate are substantially filled with the electrolyte solution by using a separator whose ability to absorb an electrolyte solution is lower than that of the positive electrode plate and the negative electrode plate, and on the other hand, the micropores of the separator are not completely filled with the electrolyte solution, and have, in some parts, voids for allowing the oxygen gas to reach from the positive electrode to the negative electrode.

### PRIOR ART DOCUMENT

### PATENT DOCUMENTS

Patent Document 1: JP-A-2017-174821
Patent Document 2: JP-A-2016-154132
Patent Document 3: JP-A-2006-114417
Patent Document 4: JP-A-60-91572

### SUMMARY OF THE INVENTION

### PROBLEMS TO BE SOLVED BY THE INVENTION

The lead-acid battery is sometimes used in a poorly charged state called a partial state of charge (PSOC). For example, in an idling stop (also referred to as start-stop or idle reduction) application, the lead-acid battery is used in PSOC. When the lead-acid battery is used in PSOC, stratification easily proceeds in which a specific gravity of an electrolyte solution in an upper part of the battery gradually decreases and the specific gravity of the electrolyte solution in a lower part of the battery increases. The stratification is particularly marked in flooded-type lead-acid batteries. As the stratification proceeds, lead sulfate markedly accumulates in a lower part of the negative electrode plate, and sulfation in which crystals of lead sulfate are generated is likely to occur. As a result, the capacity is reduced, and the plate is deteriorated due to an uneven charge-discharge reaction, so that the life of the lead-acid battery is shortened. In the present specification, the idling stop may be simply referred to as IS. Examples of the IS application include an idle reduction system vehicle.

In a lead-acid battery, a decrease in mass ratio of a positive electrode material (PAM) to a negative electrode material (NAM) tends to suppress sulfation in a negative electrode plate, and may improve the life performance of the lead-acid battery when charge-discharge is repeated in PSOC (hereinafter, sometimes referred to as PSOC life performance). However, if the mass ratio is equal to or smaller than a specific value, it may be difficult to obtain a sufficient effect of improving PSOC life performance. Hereinafter, the mass ratio of the positive electrode material to the negative electrode material may be referred to as a PAM/NAM ratio.

### MEANS FOR SOLVING THE PROBLEMS

One aspect of the present invention relates to a lead-acid battery including; at least one element; an electrolyte solution; and a cell chamber that houses the element and the electrolyte solution, in which the element includes a negative electrode plate, a positive electrode plate, and a separator interposed between the negative electrode plate and the positive electrode plate, the positive electrode plate includes a positive electrode material containing an Sb element, and having a thickness of 1.70 mm or more, the negative electrode plate includes a negative electrode material, and a mass ratio of the positive electrode material to the negative electrode material (PAM/NAM ratio) is 1.2 or more and 1.4 or less.

### ADVANTAGES OF THE INVENTION

In the lead-acid battery, excellent PSOC life performance can be secured when the PAM/NAM ratio is in a predetermined range.

### BRIEF DESCRIPTION OF THE DRAWINGS

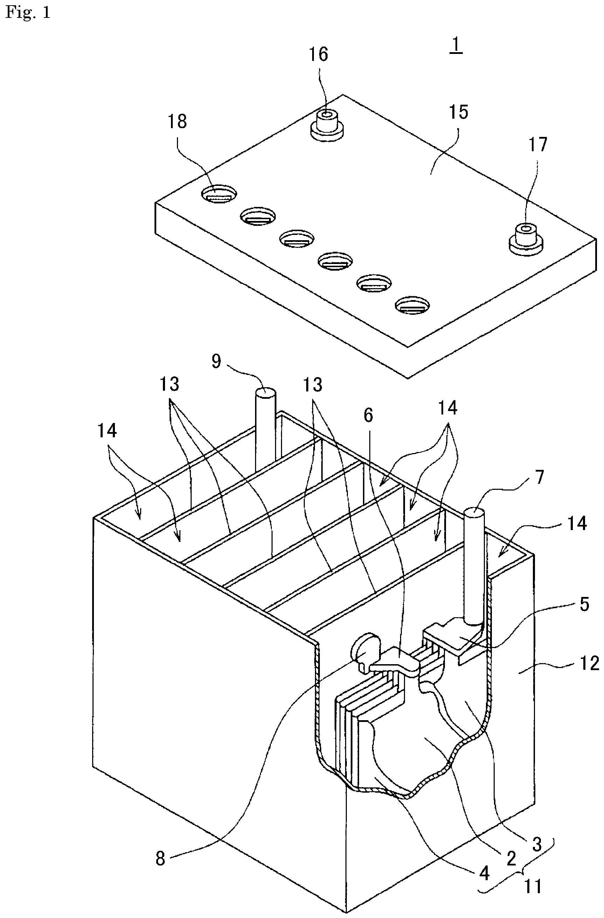

Fig. 1 is a partially cutaway exploded perspective view showing an appearance and an internal structure of a lead-acid battery according to one aspect of the present invention.

### MODE FOR CARRYING OUT THE INVENTION

In general, in a lead-acid battery, when the PAM/NAM ratio is reduced, the utilization factor of the negative electrode material is reduced, so that sulfation in the negative electrode plate is reduced, and the PSOC life performance can be improved to some extent. However, the potential of the negative electrode plate is shifted in a noble direction, so that a hydrogen overvoltage is reduced, and gas generation during charge becomes marked, resulting in a markedly decreased amount of the electrolyte solution during overcharge. Therefore, in a general lead-acid battery, the PAM/NAM ratio is often set to about 1.5.

When the PAM/NAM ratio is controlled to 1.4 or less, sulfation in the negative electrode plate can be reduced. However, when the PAM/NAM ratio is 1.4 or less, discharge is regulated by the positive electrode, and the utilization factor of the positive electrode material increases, so that softening of the positive electrode material easily proceeds. When the PAM/NAM ratio is 1.4 or less, gas generation during charge is remarkable as described above, so that the softened positive electrode material falls off due to the generated gas, and the lead-acid battery comes to the end of its life. Therefore, actually, even when the PAM/NAM ratio is controlled to 1.4 or less, the PSOC life performance is not improved so much.

In view of the above, (1) a lead-acid battery according to one aspect of the present invention includes at least one element, an electrolyte solution, and a cell chamber housing the element and the electrolyte solution. The element includes a positive electrode plate, a negative electrode plate, and a separator interposed between the positive electrode plate and the negative electrode plate. Here, the lead-acid battery satisfies the following conditions (a) to (c).
(a) The positive electrode plate includes the positive electrode material containing an Sb element.
(b) The positive electrode plate has a thickness of 1.70 mm or more.
(c) A mass ratio of the positive electrode material to the negative electrode material contained in the negative electrode plate (PAM/NAM ratio) is 1.2 or more and 1.4 or less.

First, when the PAM/NAM ratio is 1.4 or less, in the negative electrode plate, the utilization factor of the negative electrode material decreases, the reductive reaction of lead sulfate into lead easily proceeds during charge, and thus accumulation of lead sulfate is suppressed, so that sulfation is easily suppressed. On the other hand, in the positive electrode plate, the utilization factor of the positive electrode material increases, and thus the positive electrode material easily softens and falls. In the lead-acid battery, since the positive electrode material contains an Sb element (the condition (a) is satisfied), it is possible to reduce softening and falling of the positive electrode material even under conditions which are likely to cause softening and falling of the positive electrode material as described above. In addition, a PAM/NAM ratio of 1.2 or more also leads to reduction of softening and falling of the positive electrode material as described above. In addition, in the case of the condition (a), Sb is eluted and deposited on the negative electrode plate during formation or repeated charge-discharge. The Sb deposited on the negative electrode plate has a low hydrogen overvoltage and easily generates gas during charge, and the electrolyte solution is stirred by the gas, so that the effect of suppressing stratification can be further enhanced. Further, since the thickness of the positive electrode plate is as large as 1.70 mm or more (condition (b)), a sulfate ion is likely to remain in the positive electrode plate during charge, which can further suppress stratification. Since stratification is suppressed, sulfation in the negative electrode plate is further suppressed. As described above, in the lead-acid battery according to one aspect of the present invention, a stratification suppressing effect is markedly exhibited by taking measures to suppress stratification in a state where softening and falling of the positive electrode material in the positive electrode plate are suppressed. Therefore, in repetition of charge-discharge in PSOC, it is possible to markedly suppress stratification while suppressing softening and falling of the positive electrode material, and the effect of suppressing sulfation in the negative electrode plate is enhanced. This enables excellent PSOC life performance to be secured although the PAM/NAM ratio is as small as 1.4 or less.

If the PAM/NAM ratio exceeds 1.4, there is almost no difference between the effect of improving the PSOC life performance under the condition (a) and the effect of improving the PSOC life performance under the condition (b). If the PAM/NAM ratio exceeds 1.4, there is almost no difference between the effects of improving the PSOC life performance when both of the conditions (a) and (b) are satisfied and when one of the conditions (a) and (b) is satisfied. In other words, if the PAM/NAM ratio exceeds 1.4, little effect is obtained by combining the condition (a) and the condition (b).

On the other hand, when the PAM/NAM ratio is 1.2 or more and 1.4 or less (when the condition (c) is satisfied), extremely excellent PSOC life performance is obtained actually when both of the condition (a) and the condition (b) are satisfied. The result is much better than expected from combination of both the conditions (a) and (b) on the basis of a result of PSOC life performance obtained by satisfying one of the condition (a) and the condition (b) when the PAM/NAM ratio is 1.2 or more and 1.4 or less (condition (c)). That is, when the PAM/NAM ratio is 1.2 or more and 1.4 or less (condition (c)), the effect of the range of the PAM/NAM ratio, the effect of the condition (a), and the effect of the condition (b) may act synergistically to obtain unexpectedly high PSOC life performance. Thus, it can be said that the behaviors of PSOC life performance in the case of combination of the condition (a) and the condition (b) when the PAM/NAM ratio exceeds 1.4 and when the PAM/NAM ratio is 1.2 or more and 1.4 or less are completely different.

The PAM/NAM ratio is a ratio of the total mass of positive electrode materials contained in one cell of the lead-acid battery to the total mass of negative electrode materials contained in one cell. When the lead-acid battery includes two or more cells, each of the total masses of the positive electrode material and the negative electrode material is an average value of the total masses obtained for the two cells. When the lead-acid battery includes three or more cells, each average value is obtained from one cell located at the end of the lead-acid battery and one cell located near the center.

The negative electrode material and a positive electrode material are each usually held by the current collector. The electrode material is a portion of the plate which excludes the current collector. A member such as a mat or a pasting paper may be stuck to the plate. Such a member (also referred to as a sticking member) is used integrally with the plate and is thus included in the plate. When the plate includes the sticking member (such as a mat or a pasting paper), the electrode material is a part obtained by removing the current collector and the sticking member from the plate.

(2) In the lead-acid battery ((1) described above) according to one aspect of the present invention, the content of the Sb element in the positive electrode material is preferably 0.01% by mass or more and 0.5% by mass or less from the viewpoint of easily securing higher PSOC life performance. This may be because a proper effect of suppressing softening and falling of the positive electrode material is obtained, and the effect of suppressing stratification is enhanced.
(3) In the lead-acid battery of (1) or (2), the negative electrode material may contain graphite. In this case, the negative electrode plate expands during charge-discharge, and the distance between the negative electrode plate and the positive electrode plate decreases. Therefore, the sulfate ion hardly settles between plates, and the effect of suppressing the stratification can be further enhanced.
(4) In (3), the content of the graphite in the negative electrode material may be 0.5% by mass or more. In this case, the effect of suppressing stratification is further enhanced, so that the PSOC life performance can be further improved.
(5) In any one of (1) to (4), a ratio Ra (= Se/Sg) of a cross-sectional area Se of the electrolyte solution present between outer edges of the element and inner edges of the cell chamber housing the element to a cross-sectional area Sg of the element may be 0.22 or less in a cross section parallel to a bottom part of the cell chamber of the lead-acid battery in the lower portion of the lead-acid battery (condition (d)). In other words, the wall surface (side wall or partition) of the cell chamber is close to the periphery of the element, and a volume in which the electrolyte solution can be retained is limited. Sulfation in the negative electrode plate due to stratification tends to be marked in the lower portion of the negative electrode plate. To address this, the volume occupied by an electrolyte solution outside the element is relatively small in the lower part of the lead-acid battery, so that a higher effect of blocking the downward convection of the electrolyte solution which is generated during discharge is obtained. Therefore, the effect of suppressing stratification is further enhanced, and the effect of suppressing sulfation can be further enhanced.
(6) In (5), in the cross section, the ratio Rb (= Ss/Se × 100) of the total Ss of the cross-sectional areas occupied by the electrolyte solution to the cross-sectional area Se may be 80% or more in a portion located between each of the outer edges of the element at both side end parts of the element and the inner edge of the cell chamber facing each of the outer edges. When attention is paid to one cell chamber, the interval between each of the outer edges of the element at both end parts in the stacking direction of the plates and the separator in the element and the inner edge of the cell chamber facing each of the outer edges is often relatively small, and the influence on the stratification is relatively small. Meanwhile, when the interval between each of the outer edges of the element at both side end parts of the element and the inner wall of the cell chamber facing each of the outer edges is large in the lower portion of the lead-acid battery, the influence on the stratification increases. When the ratio of the total cross-sectional area Ss of the electrolyte solution in this portion to the cross-sectional area Se is as large as 80% or more, the downward convection tends to occur during discharge, and the stratification tends to occur. However, in such a case, in addition to (a) to (c), when the ratio Ra = Se/Sg in the lower portion of the lead-acid battery is 0.22 or less, the downward convection during discharge is suppressed, and the stratification is suppressed, so that higher PSOC life performance can be obtained.

The lead-acid battery according to one aspect of the present invention is particularly suitable for a flooded-type lead-acid battery. The flooded-type lead-acid battery may be called a vent-type lead-acid battery.

In the present specification, the up-down direction of the lead-acid battery or constituent elements (such as plate, container, and separator) of the lead-acid battery means the up-down direction of the lead-acid battery in the vertical direction when the lead-acid battery is in use. Each of the positive electrode plate and the negative electrode plate includes a lug part for connecting to an external terminal. In flooded-type lead-acid batteries, the lug part is usually provided above the plate so as to protrude upward.

The element usually includes a plurality of positive electrode plates, a plurality of negative electrode plates, and a separator interposed between the positive electrode plate and the negative electrode plate. The positive electrode plate and the negative electrode plate are alternately stacked with the separator interposed therebetween. The width direction (hereinafter, referred to as an "x direction") of the element is a direction orthogonal to the stacking direction (hereinafter, referred to as a "y direction") of the positive electrode plate, the negative electrode plate, and the separator, and orthogonal to the up-down direction (vertical direction). The up-down direction (vertical direction) is defined as a z direction.

The cell chambers are usually formed by dividing a space in a container of a lead-acid battery into a plurality of parts by partitions. For example, the inside of the container may be divided into a plurality of (for example, 6) spaces by partitions parallel to each other. For example, the dimension of the plurality of spaces (cell chambers) in the x direction (the width direction of the element) is larger than the dimension of the element in the y direction (stacking direction). When the lead-acid battery includes one element, the container does not need to be divided into a plurality of cell chambers, and the element and the electrolyte solution may be stored in the container. In this case, the "cell chamber" may be used in the same meaning as that of the container. The container includes a bottom part, a side wall rising from a peripheral edge of the bottom part along a vertical direction, and an opening part formed at the end part of the side wall on a side opposite to the bottom part. The lead-acid battery usually includes such a container and a lid body that closes the opening part of the container. Each element, or each element and a cell chamber housing the element may be referred to as a cell.

The dimensions of the element in the x direction and the z direction are regulated by the dimension (x) of a portion of the plate other than the lug in the x direction and the dimension of the portion in the z direction. The x direction of the element and the x direction of the negative electrode plate are the same direction, and the z direction of the element and the z direction of the element are the same direction. The y direction of the element is parallel to the thickness direction of the plate. When the dimension in the x direction or the dimension in the z direction is different between the negative electrode plate and the positive electrode plate, the dimension in the x direction and the dimension of the element in the z direction are regulated by the average value of the dimensions of the negative electrode plate and the positive electrode plate in the respective directions. The dimension of the element in the y direction corresponds to an interval between outermost surfaces (y) in the stacking direction of two members (positive electrode, negative electrode, or separator) disposed on outermost sides in the stacking direction. As described above, the cross-sectional area Sg of the element is a cross-sectional area of the element in the cross section parallel to the bottom part of the cell chamber of the lead-acid battery in the lower portion of the lead-acid battery. In the present specification, the cross section in the lower portion of the lead-acid battery is a cross section that is parallel to the bottom part of the cell chamber of the lead-acid battery and passes through a position 5 cm in height from the bottom part. In the present specification, the term "parallel to a bottom part of a cell chamber" means being parallel to an inner bottom surface of a cell chamber. The position 5 cm in height from the bottom part of the cell chamber is a position 5 cm in height from the inner bottom surface of the cell chamber. When irregularities are present on the inner bottom of the cell chamber, the lowest position of the inner bottom part of the cell chamber in the z direction is defined as a position of the inner bottom surface, and a height of 5 cm from this position is determined. The cross-sectional area Sg of the element is represented by x × y. x and y for obtaining the cross-sectional area Sg of the element are values for the cross section at a position 5 cm from the inner bottom surface of the cell chamber which is determined as described above. In the present specification, as described later, the element taken out from the lead-acid battery is disassembled into a plate and a separator, and thicknesses of the plate and the separator at a position corresponding to a position 5 cm from the inner bottom surface of the cell chamber are measured, and summed up. The thus-obtained value is defined as the dimension y. As described later, the dimension x is a width (dimension in the x direction) of the plate taken out, which is measured at a position 5 cm from the inner bottom surface of the cell chamber.

In the cross section parallel to the bottom part of the cell chamber of the lead-acid battery in the lower portion of the lead-acid battery, the cross-sectional area Se of the electrolyte solution present between the outer edges of the element and the inner edges of the cell chamber housing the element corresponds to a value obtained by subtracting a cross-sectional area (Sg = x × y) of the element from an area of a region surrounded by the inner edge of the cell chamber (cross-sectional area (S1) of the cell chamber housing the element). The cross-sectional area Se is represented by S1 - (x × y). The cross-sectional area S1 is determined by subtracting the cross-sectional area of a portion other than the element and the electrolyte solution (for example, other member such as a spacer, and a hollow part (such as a space not filled with electrolyte solution)). That is, the ratio Ra is represented by Se/Sg = (S1 - x × y)/(x × y). In the present specification, as described later, water is poured to a position 4.5 cm in height from the bottom part (specifically, the inner bottom surface as described above) of the cell chamber from which the element and the electrolyte solution are taken out, and water is then added to a position 5.5 cm in height. A value determined by dividing the volume (cm³) of the added water by a water height of 1 cm and dividing the quotient by the number of cell chambers is defined as a cross-sectional area S1.

When attention is paid to one cell chamber, in the cross section described above, the total of intervals (widths w1 and w2) between each of the outer edges of the element at both side end parts of the element (in other words, both end parts of the element in the x axis direction) and the inner edge of the cell chamber facing each of the outer edges is defined as S2. Each of these portions is hereinafter referred to as the outer portion of the side end part of the element. The total Ss of the cross-sectional areas occupied by the electrolyte solution is represented by y × S2. That is, the ratio Rb is represented by Ss/Se × 100 (%). The cross-sectional area Ss is a value determined by subtracting the cross-sectional area of a portion other than the electrolyte solution.

When the lead-acid battery includes a plurality of cells, each of the ratio Ra and the ratio Rb is an average value determined for the cell located at the end part and the cell located near the center.

In the present specification, each of the PAM/NAM ratio, the content of Sb in the positive electrode material, the thickness of the positive electrode plate, the content of graphite in the negative electrode material, the ratio Ra, and the ratio Rb is determined for the lead-acid battery in a full charge state, the element taken out from the lead-acid battery, the positive electrode plate and the negative electrode plate in the element, the separator taken out from the lead-acid battery in a full charge state, or the cell chamber (or container) after taking out the element and the electrolyte solution.

In the present specification, the full charge state of the flooded-type lead-acid battery is defined by the definition of JIS D 5301: 2019. More specifically, the following state is defined as the full charge state: the lead-acid battery is charged in a water bath at 25°C ± 2°C at a current (A) 0.2 times as large as a numerical value (numerical value whose unit is Ah) described as a rated capacity until a terminal voltage (V) during charge measured every 15 minutes or an electrolyte solution density subjected to temperature correction to 20°C exhibits a constant value at three significant digits continuously three times.

In the present specification, the lead-acid battery in a full charge state is a lead-acid battery obtained by fully charging a formed lead-acid battery. The full charge of the lead-acid battery may be performed immediately after formation so long as being performed after formation or may be performed after the lapse of time from formation (for example, a lead-acid battery in use (preferably at the initial stage of use) after formation may be fully charged). The battery at the initial stage of use refers to a battery that has not been used for a long time after the start of use and has hardly deteriorated.

The lead-acid battery according to one aspect of the present invention in (1) will be collectively described below. The following contents may be combined with any one of (2) to (6) as long as they can be technically combined.

(7) In (1), the content of the Sb element in the positive electrode material may be 0.01% by mass or more, or 0.012% by mass or more.
(8) In (1), the content of the Sb element in the positive electrode material may be 0.35% by mass or more, 0.4% by mass or more, or 0.42% by mass or more.
(9) In any one of (1), (7) and (8), the content of the Sb element in the positive electrode material may be 0.5% by mass or less.
(10) In (1) or (7), the content of the Sb element in the positive electrode material may be 0.3% by mass or less, or 0.15% by mass or less.
(11) In any one of (1) and (7) to (10), the thickness of the positive electrode plate may be 1.75 mm or more.
(12) In any one of (1) and (7) to (11), the thickness of the positive electrode plate may be 2.0 mm or less.
(13) In any one of (1) and (7) to (12), the PAM/NAM ratio may be 1.25 or more.
(14) In any one of (1) and (7) to (13), the mass of the positive electrode material contained in one cell (element) of the lead-acid battery may be 600 g or more.
(15) In any one of (1) and (7) to (14), the mass of the positive electrode material contained in one cell (element) of the lead-acid battery may be 900 g or less.
(16) In any one of (1) and (7) to (15), the negative electrode material may contain a carbonaceous material.
(17) In (16), a content of the carbonaceous material in the negative electrode material may be 0.05% by mass or more, or 0.1 parts by mass or more.
(18) In (16) or (17), the content of the carbonaceous material in the negative electrode material may be 5% by mass or less.
(19) In any one of (1) and (7) to (18), the negative electrode material (or the carbonaceous material) may contain graphite.
(20) In the (19), a content of graphite in the negative electrode material may be 0.5% by mass or more, 0.6% by mass or more, 0.7% by mass or more, 0.8% by mass or more, or 0.84% by mass or more.
(21) In (19) or (20), the content of the graphite in the negative electrode material may be 5% by mass or less.
(22) In any one of (1) and (7) to (21), the negative electrode material may contain an organic expander.
(23) In (22), a content of the organic expander in the negative electrode material may be 0.01% by mass or more.
(24) In (22) or (23), the content of the organic expander in the negative electrode material may be 1% by mass or less or 0.5% by mass or less.
(25) In any one of (1) and (7) to (24), the negative electrode material may contain barium sulfate.
(26) In (25), a content of the barium sulfate in the negative electrode material may be 0.05% by mass or more or 0.1% by mass or more.
(27) In (25) or (26), the content of the barium sulfate in the negative electrode material may be 3% by mass or less.
(28) In any one of (1) and to (27), in a cross section parallel to a bottom part of the cell chamber of the lead-acid battery and passing through a position 5 cm in height from the bottom part, a ratio Ra (= Se/Sg) of a cross-sectional area Se of the electrolyte solution present between outer edges of the element and inner edges of the cell chamber housing the element to a cross-sectional area Sg of the element may be 0.27 or less, 0.22 or less, 0.2 or less or 0.18 or less.
(29) In any one of (1) and (7) to (28), in a cross section parallel to the bottom part of the cell chamber of the lead-acid battery and passing through a position 5 cm in height from the bottom part, the ratio Ra (= Se/Sg) of the cross-sectional area Se of the electrolyte solution present between outer edges of the element and inner edges of the cell chamber housing the element to a cross-sectional area Sg of the element is 0.1 or more.
(30) In (28) or (29), a ratio Rb (= Ss/Se × 100) of a total Ss of cross-sectional areas occupied by the electrolyte solution to the cross-sectional area Se may be 80% or more or 85% or more in a portion located between each of outer edges of the element at both side end parts of the element and an inner edge of the cell chamber facing each of the outer edges.
(31) In any one of (28) to (30), the ratio Rb (= Ss/Se × 100) of the total Ss of cross-sectional areas occupied by the electrolyte solution to the cross-sectional area Se may be 100% or less, less than 100% or 99% or less in a portion located between each of outer edges of the element at both side end parts of the element and an inner edge of the cell chamber facing each of the outer edges.
(32) In any one of (1) and (7) to (31), a specific gravity of the electrolyte solution at 20°C in the lead-acid battery in a full charge state may be 1.20 or more or 1.25 or more.
(33) In any one of (1) and (7) to (32), the specific gravity of the electrolyte solution at 20°C in the lead-acid battery in the full charge state may be 1.35 or less or 1.32 or less.
(34) In any one of (1) and (7) to (33), each of the number of the positive electrode plates and the number of the negative electrode plates in the element may be one, or two or more.
(35) In any one of (1) and (7) to (33), the number of the negative electrode plates included in the element may be two or more, four or more, or six or more.
(36) In (35), when the number of the negative electrode plates included in the element is m, the number of the positive electrode plates is (m - 1) or more and (m + 1) or less when m ≥ 2 is set, and 1 or 2 when m = 1 is set.
(37) In (35) or (36), the number of the negative electrode plates included in the element may be, for example, sixteen or less, or twelve or less.
(38) In any one of (35) to (37), the number of the positive electrode plates included in the element may be, for example, fifteen or less, or twelve or less.
(39) In any one of (1) to (38), a density of the positive electrode material may be 3.6 g/cm³ or more.
(40) In any one of (1) to (39), the density of the positive electrode material may be 4.5 g/cm³ or less, or 4.3 g/cm³ or less.

Hereinafter, the lead-acid battery according to one aspect of the present invention will be described for each of the main constituent requirements. However, the present invention is not limited only to the following constituent elements.

The constituent elements described in the present specification are arbitrarily combined. At least one of (1) to (40) and at least one of the following constituent elements may be combined.

### [Lead-acid battery]

The lead-acid battery includes at least one element, an electrolyte solution, and a cell chamber that stores the element and the electrolyte solution. The element includes a negative electrode plate, a positive electrode plate, and a separator interposed therebetween.

### (Positive electrode plate)

As the positive electrode plate of the lead-acid battery, for example, a paste-type positive electrode plate is used. The paste-type positive electrode plate includes a positive current collector and a positive electrode material.

The positive current collector may be formed by casting lead (Pb) or a lead alloy, or may be formed by processing a lead sheet or a lead alloy sheet. Examples of the processing method include expanding processing or punching processing. It is preferable to use a grid-shaped current collector as the positive current collector because the positive electrode material is easy to support.

As a lead alloy used for the positive current collector, a Pb-Sb-based alloy, a Pb-Ca-based alloy, or a Pb-Ca-Sn-based alloy are preferred in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid part, only on the lug part, or only on the frame rib part of the positive current collector.

The positive electrode material contained in the positive electrode plate contains an Sb element. The positive electrode material typically contains a positive active material (lead dioxide or lead sulfate) that exhibits a capacity through a redox reaction. The positive electrode material may contain another additive if necessary.

The content of the Sb element in the positive electrode material is, for example, 0.01% by mass or more, and may be 0.012% by mass or more. When the content of the Sb element is in such a range, a higher softening suppression effect of the positive electrode material is obtained. From the viewpoint of easily securing higher PSOC life performance, the content of the Sb element may be 0.35% by mass or more, or 0.4% by mass or more, or may be 0.42% by mass or more. If the content of the Sb element in the positive electrode material reaches a certain level, the effect of improving PSOC life performance tends to be low, or hits a peak. For this reason, the content of Sb in the positive electrode material may be 0.5% by mass or less, or may be 0.3% by mass or less, or 0.15% by mass or less. When the content of the Sb element is in such a range, deposition of Sb on the negative electrode plate can be set within a proper range, and it is possible to suppress stratification while suppressing falling of the positive electrode material by proper gas generation.

The content of the Sb element in the positive electrode material may be 0.01% by mass or more (or 0.012% by mass or more) and 0.5% by mass or less, 0.35% by mass or more (or 0.4% by mass or more) and 0.5% by mass or less, 0.42% by mass or more and 0.5% by mass or less, 0.01% by mass or more (or 0.012% by mass or more) and 0.3% by mass or less, or 0.01% by mass or more (or 0.012% by mass or more) and 0.15% by mass or less.

The thickness of the positive electrode plate is, for example, 1.70 mm or more, and may be 1.75 mm or more. In either case, the effect of suppressing stratification is high, and excellent PSOC life performance is obtained. The thickness of the positive electrode plate can be selected, for example, within a range which allows the PAM/NAM ratio to satisfy the condition (c). When the thickness of the positive electrode plate is 1.70 mm or more, the PSOC life performance is significantly improved as compared to the case where the thickness of the positive electrode plate is less than 1.70 mm, but the PSOC life performance tends to hit a peak when the thickness of the positive electrode plate is larger than 1.70 mm. When the positive electrode plate has a certain thickness of 1.70 mm or more, it can be said that high PSOC life performance is obtained. For this reason, the thickness of the positive electrode plate may be, for example, 2.0 mm or less.

In the lead-acid battery, the PAM/NAM ratio is 1.2 or more and 1.4 or less. When the PAM/NAM ratio is in such a range, high PSOC life performance is obtained by combination of the conditions (a) and (b). From the viewpoint of securing higher PSOC life performance, the PAM/NAM ratio may be 1.25 or more. The PAM/NAM ratio can be adjusted, for example, by adjusting the filling amount of the electrode material in each plate.

In the lead-acid battery, the mass of the positive electrode material contained in one cell may be, for example, 600 g or more. The mass of the positive electrode material contained in one cell may be, for example, 900 g or less.

In the lead-acid battery, the density of the positive electrode material may be 3.6 g/cm³ or more. The density of the positive electrode material is 4.5 g/cm³ or less, and may be 4.3 g/cm³ or less.

The density of the positive electrode material means a bulk density (unit: g/cm³) of the positive electrode material. The bulk density is determined by dividing the mass (unit: g) of the positive electrode material by the bulk volume (unit: cm³) of the positive electrode material. The bulk volume is determined by a mercury intrusion method. The bulk density is determined for a sample of an unground positive electrode material collected from a positive electrode plate taken out from the lead-acid battery in a full charge state. The unground sample is taken from the vicinity of the center of the plate in a planar direction.

An unformed paste-type positive electrode plate is obtained by filling a positive current collector with a positive electrode paste, and curing and drying the paste. The positive electrode paste is prepared by mixing lead powder, an antimony compound and another additive (for example, resin fiber), water, and sulfuric acid. Thereafter, the positive electrode plate is obtained by forming the unformed positive electrode plates. Examples of the antimony compound include oxides (antimony trioxide and the like).

The formation of the unformed positive electrode plate may be performed, for example, by housing the element including the unformed positive electrode plate and the electrolyte solution containing sulfuric acid in the container of the lead-acid battery and charging the element in the state where the electrolyte solution is soaked into the element. However, the formation may be performed before the lead-acid battery or the element is assembled.

### (Analysis or measurement of positive electrode plate or positive electrode material)

The analysis or measurement of the positive electrode plate or the positive electrode material is performed using the positive electrode plate taken out from the lead-acid battery in a full charge state.

### (1) Measurement of mass of positive electrode material

First, the lead-acid battery in a full charge state is disassembled to obtain the positive electrode plate to be analyzed. The obtained positive electrode plate is washed with water for 3 to 4 hours and dried to remove the electrolyte solution in the positive electrode plate. The washed positive electrode plate is dried in a thermostatic chamber at 60°C ± 5°C for greater than or equal to 5 hours. After drying, when the sticking member is included in the positive electrode plate, the sticking member is removed from the positive electrode plate by peeling. The mass of the dried product (positive electrode plate) is measured. Next, the positive electrode material is dropped from the positive current collector, and the positive electrode material adhering to the positive current collector is removed by mannitol treatment. The obtained positive current collector is washed with water and dried, and then the mass of the positive current collector is measured. The mass of the positive electrode material is obtained by subtracting the mass of the positive current collector from the mass of the positive electrode plate. The mass of the positive electrode material in the cell is obtained by summing the masses of the positive electrode materials for all the positive electrode plates in the cell. The value of the mass of the positive electrode material determined in the manner mentioned above is used for calculating the PAM/NAM ratio.

### (2) Quantitative analysis of Sb element

An appropriate amount of a sample is collected from the positive electrode material in a dried state, which is dropped from the positive current collector by the same procedure as in (1) above, and the mass of the sample is measured. Next, the entire amount of the sample is dissolved in a mixed aqueous solution containing tartaric acid, nitric acid, and hydrogen peroxide. The solution obtained by dissolution in an entire amount is diluted with ion-exchanged water as necessary to define a volume, and thereafter, emission intensity of Sb in the solution is measured by highfrequency inductively coupled plasma (ICP) emission spectroscopy. The mass of Sb contained in the solution is obtained using a previously-produced calibration curve. The ratio of the mass of Sb to the mass of the sample of the positive electrode material subjected to analysis is determined as the content of Sb.

### (3) Thickness of positive electrode plate

The element is taken out from the lead-acid battery in a full charge state, and all the positive electrode plates are taken out from the element. The thicknesses of all the positive electrode plates included in the element are measured with a caliper and averaged to determine the thickness of the positive electrode plate. In a lead-acid battery including a plurality of elements, the thickness (average value) of the positive electrode plate is determined by determining and averaging the thicknesses of the positive electrode plate in one element located at the end part and one element located near the center.

### (4) Density of positive electrode material

A sample is collected from the positive electrode material in a dried state, which is dropped from the positive current collector by the same procedure as in (1) above, and the density (bulk density) is determined by a mercury intrusion method using a mercury porosimeter. More specifically, first, a predetermined amount of the unground sample is collected, and the mass thereof is measured. The sample is charged into a measurement container of a mercury porosimeter, evacuated under reduced pressure, and then filled with mercury at a pressure of 0.5 psia or more and 0.55 psia or less (≈ 3.45 kPa or more and 3.79 kPa or less) to measure a bulk volume of the sample and the measured mass of the sample is divided by the volume to determine the bulk density of the positive electrode material. A volume obtained by subtracting a mercury injection volume from a volume of the measurement container is defined as the bulk volume. As the mercury porosimeter, an automatic porosimeter (AutoPore IV 9505) manufactured by Shimadzu Corporation is used. When the element includes one positive electrode plate, the density of the positive electrode material is determined for a positive electrode material taken from the positive electrode plate. When the element includes two positive electrode plates, the density of the positive electrode material is an average of values determined for positive electrode materials taken from two positive electrode plates, respectively. When the element includes three or more positive electrode plates, the density of the positive electrode material is an average of values determined for positive electrode materials taken from two positive electrode plates arbitrarily selected from positive electrode plates other than the plates at both ends l of the element. It is to be noted that when two of the three positive electrode plates are plates at both ends of the element, the density of the positive electrode material is determined for a positive electrode material taken from the remaining one positive electrode plate.

### (Negative electrode plate)

The negative electrode plate contains a negative electrode material. The negative electrode plate typically contains a negative current collector.

The negative current collector may be formed by casting lead (Pb) or a lead alloy, or may be formed by processing a lead sheet or a lead alloy sheet. Examples of the processing method include expanding processing or punching processing. It is preferable to use the grid-like current collector as the negative current collector because the negative electrode material is easy to support.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative current collector may include a surface layer. The surface layer and the inner layer of the negative current collector may have different compositions. The surface layer may be formed in a part of the negative current collector. The surface layer may be formed, for example, only on the grid portion, only on the lug portion, or only on the frame rib portion of the negative current collector.

The negative electrode material contains a negative active material (lead or lead sulfate) that exhibits a capacity through a redox reaction. The negative electrode material may contain an additive as necessary. The additive is preferably an organic expander, a carbonaceous material, and barium sulfate and the like. The negative electrode material may contain other additives (for example, a reinforcing material (resin fiber or the like)) in addition to these additives.

Examples of the organic expander include a lignin compound and a synthetic organic expander. Examples of the lignin compound include lignin and lignin derivatives (for example, lignin sulfonic acid or salts thereof (such as alkali metal salts (sodium salts and the like)). However, the organic expander is not limited to these specific examples. The negative electrode material may contain one kind or two or more kinds of organic expanders.

The content of the organic expander in the negative electrode material is, for example, 0.01% by mass or more. The content of the organic expander is, for example, 1% by mass or less and may be 0.5% by mass or less.

Examples of the carbonaceous material include carbon black, graphite (such as artificial graphite and natural graphite), hard carbon, and soft carbon. The negative electrode material may contain one kind or two or more kinds of carbonaceous materials.

When the carbonaceous material contains graphite, the expansion of the negative electrode plate during charge-discharge is likely to become marked, so that the interval between the negative electrode plate and the adjacent positive electrode plate (inter-electrode distance) decreases. Therefore, the sulfate ion hardly settles, and stratification is more easily suppressed. Thus, higher PSOC life performance is easily obtained. Graphite and another carbonaceous material (for example, carbon black) may be combined.

From the viewpoint of easily obtaining the effect of expanding the negative electrode plate, and further enhancing the effect of suppressing stratification, the content of graphite in the negative electrode material is preferably 0.5% by mass or more, and may be 0.6% by mass or more or 0.7% by mass or more, or 0.8% by mass or more or 0.84% by mass or more. The content of graphite in the negative electrode material is, for example, 5% by mass or less.

The content of the carbonaceous material in the negative electrode material is, for example, 0.05% by mass or more and may be 0.1 parts by mass or more. The content of the carbonaceous material may be, for example, 5% by mass or less.

The content of barium sulfate in the negative electrode material is, for example, 0.05% by mass or more and may be 0.1% by mass or more. The content of barium sulfate is, for example, 3% by mass or less.

### (Others)

An unformed negative electrode plate is prepared, for example, by applying or filling a negative electrode paste to or in a negative current collector, followed by curing and drying. The negative active material in a charge state is spongy lead, but the unformed negative electrode plate is usually prepared using a lead powder. More specifically, the negative electrode paste used for preparing an unformed negative electrode plate is prepared, for example, by adding water and sulfuric acid (or aqueous sulfuric acid solution) to a lead powder and, as necessary, various additives (organic expander and carbonaceous material and the like), followed by mixing. At the time of curing, it is preferable to cure the unformed negative electrode plate at a higher temperature than room temperature and high humidity. The negative electrode plate is prepared by, for example, forming the unformed negative electrode plate.

The formation may be performed, for example, by housing the element including the unformed negative electrode plate and the electrolyte solution containing sulfuric acid in the container of the lead-acid battery and charging the element in a state where the electrolyte solution is soaked into the element. However, the formation may be performed before the lead-acid battery or the element is assembled. The formation produces spongy lead.

### (Analysis or measurement of negative electrode material)

The analysis or measurement of the negative electrode material is performed using the negative electrode plate taken out from the lead-acid battery in a full charge state.

Prior to analysis or measurement, a negative electrode material is collected from the negative electrode plate. The negative electrode material is collected by the following procedure.

First, the lead-acid battery in a full charge state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. After drying, when the sticking member is included in the negative electrode plate, the sticking member is removed by peeling. The mass of the dried product (negative electrode plate) is measured. Next, the negative electrode material is scraped and separated from the negative current collector to obtain a sample (hereinafter, referred to as sample A). The sample Ais ground as necessary and subjected to analysis of constituent components of the negative electrode material.

### (1) Quantification of negative electrode material

From the negative current collector from which the negative electrode material is scraped as described above, the negative electrode material is further dropped, the negative current collector is rubbed with a brush or the like to remove the negative electrode material adhering to the negative current collector. The resulting negative current collector is washed with water and dried, and then the mass of the negative current collector is measured. The mass of the negative electrode material is obtained by subtracting the mass of the negative current collector from the mass of the negative electrode plate. The mass of the negative electrode material in the cell is obtained by summing the masses of the negative electrode materials for all the negative electrode plates in the cell. The value of the mass of the negative electrode material determined in the manner mentioned above is used for calculating the PAM/NAM ratio.

### (2) Analysis of constituent components in negative electrode material

### (2-1) Quantitative determination of organic expander

A predetermined amount of a crushed sample A is collected, and the amount of the sample is measured. The sample is immersed in a 1 mol/L NaOH aqueous solution to extract the organic expander. Insoluble components are removed from the NaOH aqueous solution containing the extracted organic expander by filtration, and a filtrate (hereinafter, also referred to as a filtrate B) is recovered.

A predetermined amount of the filtrate B is weighed, desalted, then concentrated, and dried to obtain a powder of the organic expander (hereinafter, also referred to as a sample C). The desalination is performed by using a desalination column, by causing the filtrate B to pass through an ion-exchange membrane, or by placing the filtrate B in a dialysis tube and immersing the filtrate B in distilled water.

The organic expander is specified by combining information obtained from an infrared spectral spectrum of the sample C, an ultraviolet-visible absorption spectrum of a solution obtained by dissolving a sample E in distilled water or the like, a nuclear magnetic resonance (NMR) spectrum of a solution obtained by dissolving the sample C in a solvent such as heavy water, or a pyrolysis GC-MS capable of obtaining information on individual compounds constituting the substance, or the like.

The ultraviolet-visible absorption spectrum of the filtrate B is measured. The content of the organic expander in the negative electrode material is determined quantitatively from a spectral intensity, a calibration curve prepared in advance, the amount of the filtrate B weighed, and the mass of the sample A subjected to analysis. When the structural formula of the organic expander to be analyzed cannot be exactly specified, and the calibration curve of the same organic expander cannot be used, the calibration curve is prepared using an available organic expander exhibiting an ultraviolet-visible absorption spectrum, an infrared spectral spectrum, an NMR spectrum, and the like similar to those of the organic expander to be analyzed.

### (2-2) Separation and quantitative determination of carbonaceous material

A predetermined amount of ground sample A was collected, 30 mL of a nitric acid aqueous solution at a concentration of 60% by mass is added per 5 g of sample A, and the mixture is heated at 70°C. 10 g of disodium ethylenediaminetetraacetate, 30 mL of ammonia water having a concentration of 28% by mass, and 100 mL of water are added per 5 g of the sample A, and heating is continued to dissolve a soluble component. The sample thus pretreated is collected by filtration. The collected sample is passed through a sieve with an opening of 500 µm to remove components having a large size such as a reinforcing material, and components having passed through the sieve are collected as the carbonaceous materials.

The content of the carbonaceous material in the negative electrode material is determined by measuring the mass of each carbonaceous material separated by the above procedure and calculating a ratio (% by mass) of a total of the mass to the mass of sample A subjected to analysis.

For example, when the carbonaceous material contains graphite and a carbonaceous material other than graphite (for example, carbon black), the carbonaceous materials are separated by the following procedure.

When the carbonaceous material collected as described above is sieved by a wet method using a sieve with an opening of 32 µm, the carbonaceous material remaining on the sieve without passing through a sieve mesh is taken as graphite, and the carbonaceous material passing through the sieve mesh is taken as the other carbonaceous material. Graphite has a large particle size among carbonaceous materials, and thus is separated from other carbonaceous materials with respect to the size of the sieve opening. For wet sieving, JIS Z 8815:1994 can be referred to.

Specifically, the carbonaceous material is placed on a sieve having an opening of 32 µm, and sieved by gently shaking the sieve for 5 minutes while sprinkling ion-exchange water. The graphite remaining on the sieve is collected from the sieve by pouring ion-exchange water over the sieve, and separated from the ion-exchange water by filtration. The other carbonaceous material that has passed through the sieve is collected by filtration using a membrane filter (opening: 0.1 µm) made of nitrocellulose. The collected graphite and other second carbonaceous material are each dried at a temperature of 100°C for 2 hours. As the sieve having an opening of 32 µm, a sieve provided with a sieve mesh having a nominal opening of 32 µm, which is defined in JIS Z 8801-1:2006, is used.

The content of graphite in the negative electrode material is determined by calculating a ratio (% by mass) of the measured mass of graphite to the mass of sample A subjected to analysis.

### (2-3) Quantitative determination of barium sulfate

A predetermined amount of ground sample A was collected, 50 ml of nitric acid with a concentration of 20% by mass is added to 10 g of sample A, and the mixture is heated for about 20 minutes to dissolve the lead component as lead ions. The resulting solution is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of the carbonaceous material and barium sulfate. By subtracting the mass of the membrane filter from the total mass of a dried mixed sample (hereinafter, referred to as a sample D) and the membrane filter, a mass (Mₘ) of the sample D is measured. Thereafter, the sample D is placed in a crucible together with a membrane filter and is burned and incinerated at 1,300°C or higher. The residue remaining is barium oxide. The mass of barium sulfate (M_{B}) is determined by converting the mass of barium oxide to the mass of barium sulfate.

### (Separator)

The separator can be disposed between the negative electrode plate and the positive electrode plate. As the separator, at least one selected from a nonwoven fabric and a microporous membrane, and the like are used.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among them, glass fibers are preferable. The nonwoven fabric may contain components other than the fibers (for example, an acid resistant inorganic powder and a polymer as a binder) and the like.

On the other hand, the microporous film is a porous sheet mainly made of components except for fiber components and is obtained by, for example, extrusion molding a composition containing, for example, a pore-forming additive into a sheet shape and then removing the pore-forming additive to form pores. The microporous film is preferably formed of a material having acid resistance, and is preferably a microporous film composed mainly of a polymer component. As the polymer component, a polyolefin (a polyethylene, a polypropylene, etc.) is preferable. Examples of the pore-forming additive include at least one selected from the group consisting of a polymer powder and oil.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded part is along the horizontal direction of the lead-acid battery (e.g., such that the bent part may be parallel to the horizontal direction), and the separator may be disposed such that the folded part is along the vertical direction (e.g., such that the bent part is parallel to the vertical direction). In the separator folded in the bellows shape, recesses are alternately formed on both main surface sides of the separator. Since the lug parts are usually formed on the upper part of the positive electrode plate and the negative electrode plate, when the separator is disposed such that the folded parts are along the horizontal direction of the lead-acid battery, the positive electrode plate and the negative electrode plate are each disposed only in the recess on one main surface side of the separator (i.e., a double separator is interposed between the adjacent positive electrode plate and negative electrode plate). When the separator is disposed such that the folded part is along the vertical direction of the lead-acid battery, the positive electrode plate can be housed in the recess on one main surface side, and the negative electrode plate can be housed in the recess on the other main surface side (i.e., the separator can be interposed singly between the adjacent positive electrode plate and negative electrode plate). When the bag-shaped separator is used, the bag-shaped separator may house the positive electrode plate or may house the negative electrode plate.

### (Electrolyte solution)

The electrolyte solution is an aqueous solution containing sulfuric acid. If necessary, the electrolyte solution may contain a polymer that swells in the electrolyte solution. The electrolyte solution preferably has fluidity at an operating temperature, and is more preferably liquid at 25°C. In these cases, stratification is likely to become marked in general, but in the lead-acid battery according to one aspect of the present invention, a high effect of suppressing stratification is obtained.

The electrolyte solution may contain cations (for example, metal cations) and/or anions (for example, anions other than sulfate anions (such as phosphate ions)) as necessary. Examples of the metal cation include at least one selected from the group consisting of a Na ion, a Li ion, a Mg ion, and an Al ion.

The specific gravity of the electrolyte solution in the lead-acid battery in a full charge state at 20°C is, for example, 1.20 or more and may be 1.25 or more. The specific gravity of the electrolyte solution at 20°C is 1.35 or less, and may be 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

### (Others)

The lead-acid battery may include one cell or two or more cells. When the lead-acid battery includes a plurality of cells (in other words, a plurality of elements), the plurality of elements may be connected in series.

The number of plates in the element may be one, or two or more. From the viewpoint of securing a higher capacity, the number of negative electrode plates included in the element is preferably two or more, and may be four or more or six or more. The numbers of positive electrode plates and negative electrode plates included in the element may be determined according to the thickness of the plate, the PAM/NAM ratio, the size of the container or the cell chamber, the type of lead-acid battery, and the like. The number of positive electrode plates included in the element may be, for example, 15 or less, or may be 11 or less. The number of negative electrode plates included in the element may be, for example, 16 or less, or may be 12 or less. When the number of negative electrode plates included in the element is m, the number of positive electrode plates is (m - 1) or more and (m + 1) or less when m ≥ 2 is set, and is 1 or 2 when m = 1 is set.

The ratio Ra (= Se/Sg) is, for example, 0.27 or less. From the viewpoint that the effect of suppressing stratification is enhanced, the ratio Ra is preferably 0.22 or less, and may be 0.2 or less, or 0.18 or less. From the viewpoint of easily adjusting the balance between the electrolyte solution and the electrode material, the ratio Ra is, for example, 0.1 or more.

The ratio Rb (= Ss/Se ×100) may be 80% or more or 85% or more. The ratio Rb is 100% or less, and may be less than 100% (for example, 99% or less). When the ratio Rb is in such a range, the above (a) to (c) are satisfied, and the ratio Ra is in the above-described range (condition (d)), the PSOC life performance can be further enhanced.

The ratio Rb may be 80% or more (or 85% or more) and 100% or less, 80% or more (or 85% or more) and less than 100%, or 80% or more (or 85% or more) and 99% or less.

In common use for starting, the ratio Ra is about 0.29 to 0.56, and the ratio Rb is about 52% to 73%. In the IS application, the ratio Ra is 0.17 to 0.19, and the ratio Rb is about 77 to 81%.

Each of the ratio Ra and the ratio Rb is determined in a portion parallel to the bottom part of the cell chamber (or container) of the lead-acid battery in a full charge state and at a height of 4.5 cm to 5.5 cm from the bottom part (more specifically, the inner bottom surface) of the cell chamber.

More specifically, the ratio Ra is determined by the following procedures. First, the cross-sectional area S1 of the cell chamber (or container) is determined by the following procedures. After the element and the electrolyte solution are taken out from the container, the container is washed with water, dried, then placed on a flat surface, and charged with water to a position parallel to the bottom part of the container and at a height of 4.5 cm from the bottom part. Next, water is added to a position 5.5 cm in height from the bottom part, and the volume (cm³) of the added water is determined. The cross-sectional area S1 (cm²) of the container is determined by dividing the volume of the added water by the height of 1 cm. When the container is divided into a plurality of cells, the cross-sectional area S1 (cm²) of each cell chamber is determined by dividing the cross-sectional area (cm²) of all the cell chambers determined in the same manner as in the container by the number of the cell chambers. In the lead-acid battery, when a portion (for example, other member such as a spacer and a hollow portion (such as a space not filled with an electrolyte solution)) other than the element and the electrolyte solution is present in the container or the cell chamber, the cross-sectional area S1 of the container or the cell chamber is determined by the above procedures in a state where the portion is present.

The element taken out from the lead-acid battery in a full charge state is disassembled into a positive electrode plate, a negative electrode plate, and a separator, and the thickness of the positive electrode plate, the thickness of the negative electrode plate, and the total thickness of the separator are determined by the above-described procedures. At this time, each thickness at a position corresponding to a position 5 cm in height from the bottom part (more specifically, the inner bottom surface) of the cell chamber (or container) is determined by a caliper. The thickness of the positive electrode plate × the number of the positive electrode plates, the thickness of the negative electrode plate × the number of the negative electrode plates, and the total thickness of the separator × the number of the separators present between the positive electrode plate and the negative electrode plate (in the case of a bag-shaped separator, the total thickness of the separator × the number of the bag-shaped separators ×2) are determined, and the determined values are summed. Accordingly, the thickness (dimension y) of the element in the stacking direction (y direction) is determined. Subsequently, the width (dimension in the x direction) of the plate at a position 5 cm in height from the bottom part (more specifically, the inner bottom surface) of the cell chamber (or container) is measured with a scale. When the widths of the positive electrode plate and the negative electrode plate are different from each other, the average value of the widths is determined and taken as the width of the plate (dimension of the element in the x direction). The sectional area Sg of the element is determined by multiplying the width of the plate by the thickness (dimension y) of the element in the stacking direction.

Se = S1 - Sg is determined from S1 and Sg. The ratio Ra is determined by dividing Se by Sg. In a lead-acid battery including a plurality of cells, the ratio Ra is determined by averaging the ratios Ra determined for a cell located at the end part and a cell located near the center.

The ratio Rb is determined by the following procedures. The internal dimension Lx of the cell chamber (or container) in a direction parallel to the x direction of the element is measured on a scale at a position 5 cm in height from the bottom part (more specifically, the inner bottom surface) of the cell chamber or the container. When a wall surface rib or a convex part protruding into the cell chamber is present on the inner wall of the cell chamber in the outer portion of the side end part of the element in the cross-sectional image, the inner dimension Lx is measured except for these portions. The total value (S2) of the widths w1 and w2 of the outer portions (in other words, the interval between the outer edge of the side end part of the element and the inner edge of the cell chamber facing the outer edge portion) of both side end parts of the element is determined by subtracting the width (dimension in the x direction) of the plate determined above from Lx. Ss = y × (w 1 + w2) = y × S2 is determined from the total value S2 and the dimension y of the element determined above in the y direction. A ratio Rb (%) is calculated from Rb = Ss/Se × 100. In a lead-acid battery including a plurality of cells, the ratio Rb is determined by averaging the ratios Rbs determined for the cell located at the end part and the cell located near the center.

The total thickness of the separator is determined by the following procedure.

First, a sample of the separator for measurement is prepared by removing sulfuric acid from the separator taken out from the lead-acid battery in a full charge state by washing with water. The measurement of the separator is performed within 10 minutes immediately after water washing in a state where the separator is wet with water. The separator includes a base portion. The separator may further include a rib protruding outward from the base portion. When the separator includes a rib, the total thickness of the separator corresponds to the total of the thickness of the base part and the height of the rib. The total thickness of the separator is determined by measuring and averaging the total thicknesses of the samples of a plurality of (for example, ten) separators extracted from the lead-acid battery using a caliper.

In a lead-acid battery, an opening of a container is usually closed with a lid body. The lid body includes, for example, a negative electrode terminal and a positive electrode terminal. The lid body may have a single structure (single lid), or may have a double structure including an inner lid and an outer lid (or upper lid). The lid having the double structure may have a reflux structure between the inner lid and the outer lid for returning the electrolyte solution into the battery (inside the inner lid) through a reflux port provided in the inner lid.

The lead-acid battery can be obtained, for example, by a manufacturing method including a step of housing an element and an electrolyte solution in a cell chamber of a container. Each cell of the lead-acid battery includes the element and the electrolyte solution stored in each cell chamber. The element is assembled by, for example, stacking a positive electrode plate, a negative electrode plate, and a separator such that the separator is interposed between the positive electrode plate and the negative electrode plate prior to storage in the cell chamber. The positive electrode plate, the negative electrode plate, and the separator are usually each prepared prior to the assembly of the element. The electrolyte solution is prepared prior to storage in the cell chamber. When the lead-acid battery includes one element, the container does not need to be divided into a plurality of cell chambers, and the element and the electrolyte solution may be stored in the container.

A method for manufacturing the lead-acid battery may include a step of forming at least one of the positive electrode plate and the negative electrode plate as necessary after a step of housing the element and the electrolyte solution in the cell chamber.

### (Evaluation)

The PSOC life performance of the lead-acid battery is evaluated by the following procedures.

In a water tank at 25°C ± 3°C, the following steps 1 to 7 are repeatedly performed until the life of the battery is determined to end. The combination of step 2 and step 3 is defined as one cycle, and the number of cycles until the life of the battery is determined to end is measured. When the end-of-discharge voltage reaches 1.67 V/cell or less in step 1 or step 3, the life of the battery is determined to end. The larger the number of cycles of the combination of step 2 and step 3, the more excellent the cycle life in PSOC. Note that I₂₀ is a 20 hour rate current (A), which is a current (A) 1/20 times a numerical value (numerical value in which the unit is Ah) described as a rated capacity.

Step 1: The lead-acid battery is discharged at a constant current of four times of I₂₀ (A) for 2.5 hours (depth of discharge: DOD) 50%).

Step 2: The lead-acid battery is charged for 40 minutes under the conditions of a constant voltage of 2.4 V/cell and a maximum current of seven times of I₂₀ (A).

Step 3: The lead-acid battery is discharged at a constant current of four times of I₂₀ (A) for 30 minutes. (DOD 17.5%)

Step 4: The combination of step 2 and step 3 is repeated 85 times.

Step 5: The lead-acid battery is charged for 18 minutes under the conditions of a constant voltage of 2.67 V/cell and a maximum current of two times of I₂₀ (A).

Step 6: The lead-acid battery is discharged to 1.75 V/cell at a constant current of I₂₀ (A).

Step 7: The lead-acid battery is charged for 24 minutes under the conditions of a constant voltage of 2.67 V/cell and a maximum current of five times of I₂₀ (A).

After step 7, the process returns to step 1. The PSOC life determined by such a procedure may be referred to as a 17.5% DOD life.

Fig. 1 shows an appearance of an example of a lead-acid battery according to an embodiment of the present invention. However, the lead-acid battery according to one aspect of the present disclosure is not limited only to the following embodiment.

A lead-acid battery 1 includes a container 12 that stores an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and a plurality of positive electrode plates 3 with a separator 4 interposed therebetween. At this point, the bag-shaped separator 4 accommodating the negative electrode plate 2 is shown, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series.

The positive electrode shelf 5 is formed by welding the lug parts, provided on the upper parts of the respective positive electrode plates 3, to each other by a cast-on-strap method or a burning method. The negative electrode shelf 6 is also formed by welding the lug parts, provided on the upper parts of the respective negative electrode plates 2, to each other in accordance with the case of the positive electrode shelf 5.

The lid 15 of the lead-acid battery has a single structure (single lid), but is not limited to the illustrated examples. As described above, the lid 15 may have, for example, a double structure. The lid having a double structure may have a reflux structure.

### EXAMPLES

Hereinafter, a lead-acid battery according to one aspect of the present invention is specifically described on the basis of examples and comparative examples, but the present invention is not limited only to the following examples.

### <<Lead-acid batteries E1 to E9 and C1 to C22>>

### (1) Preparation of lead-acid battery

### (a) Preparation of negative electrode plate

A lead powder, water, dilute sulfuric acid, sodium lignin sulfonate as an organic expander, barium sulfate, carbon black, and graphite are mixed to obtain a negative electrode paste. At this time, the amounts of the organic expander, barium sulfate, carbon black, and graphite are adjusted such that the contents of the respective components in a negative electrode material, all of which are determined by the procedures described above, are 0.2% by mass, 0.6% by mass, 0.3% by mass, and 0.84% by mass, respectively. For E8, E9, C21, and C22, the amount of graphite mixed is adjusted so that the content of graphite is a value shown in Table 3. A mesh portion of an expanded grid made of a Pb-Ca-Sn alloy is filled with the negative electrode paste, which is then cured and dried. Thus, an unformed negative electrode plate is obtained.

For the lead-acid battery fully charged after formation, the filling amount of the negative electrode paste is adjusted so that the PAM/NAM ratio determined by the procedure described above is the value shown in Table.

### (b) Preparation of positive electrode plate

Lead powder, an antimony compound (antimony trioxide) if necessary, water, and dilute sulfuric acid are mixed to obtain a positive electrode paste. At this time, the respective components are mixed so that the content of an Sb element in the positive electrode material, which is determined by the procedure described above, is a value shown in the table. A mesh portion of an expanded grid made of a Pb-Ca-Sn alloy as a positive current collector is filled with the positive electrode paste, which is then cured and dried. Thus, an unformed positive electrode plate is obtained.

For the lead-acid battery fully charged after formation, the filling amount of the positive electrode paste is adjusted so that the PAM/NAM ratio and the thickness of the positive electrode plate, which are determined by the procedure described above, are values shown in Table.

### (c) Preparation of test battery

A test battery has a rated voltage of 2 V/cell and a rated 20-hour rate capacity of 60 Ah. An element of the test battery includes seven positive electrode plates and eight negative electrode plates. First, an unformed negative electrode plate is housed in a bag-shaped separator, and thereon, the positive electrode plates and the negative electrode plates are stacked alternately. An element including the resulting unformed plate is housed in a container together with an electrolyte solution (sulfuric acid aqueous solution), and subjected to formation in the container to prepare a flooded-type lead-acid battery. At this time, adjustment is made using a spacer so that the ratio Ra determined by the procedure described above is 0.18 (the ratio Ra is 0.27 for E9 and C22). The specific gravity of the electrolyte solution in a lead-acid battery in a full charge state at 20°C is 1.285. The lead-acid battery is fully charged by the formation. In E1 to E9, ratios Rb determined by the procedures described above are 80% or more (more specifically, 95% or more).

### (d) Evaluation

The PSOC life performance (17.5% DOD life) of the test battery prepared as described above is evaluated by the methods described above. In Table 1, the evaluation results of the lead-acid battery are shown as relative values when the evaluation results of the lead-acid battery C1 are 100. The evaluation of each life performance indicates that a higher effect is obtained as the numerical value is larger.

Tables 1 to 3 show the results. E1 to E9 correspond to examples. C1 to C22 correspond to comparative examples. For E1 to E9, the density of the positive electrode plate, which is determined by the procedure described above, is 3.6 g/cm³ or more and 4.3 g/cm³ or less.

**[Table 1]**

| Battery No. | PAM/NAM | Sb content (% by mass) | Positive electrode thickness (mm) | PSOC life performance (%) |
|---|---|---|---|---|
| C1 | 1.50 | 0 | 1.53 | 100 |
| C2 | 1.40 | 0 | 1.53 | 123 |
| C3 | 1.25 | 0 | 1.53 | 118 |
| C4 | 1.20 | 0 | 1.53 | 115 |
| C5 | 1.10 | 0 | 1.53 | 105 |
| C6 | 1.50 | 0.042 | 1.75 | 115 |
| E1 | 1.40 | 0.042 | 1.75 | 206 |
| E2 | 1.25 | 0.042 | 1.75 | 204 |
| E3 | 1.20 | 0.042 | 1.75 | 198 |
| C7 | 1.10 | 0.042 | 1.75 | 144 |
| C8 | 1.50 | 0 | 1.53 | 100 |
| C9 | 1.50 | 0.042 | 1.53 | 124 |
| C10 | 1.50 | 0 | 1.75 | 121 |
| C11 | 1.50 | 0.042 | 1.75 | 125 |
| C3 | 1.25 | 0 | 1.53 | 118 |
| C12 | 1.25 | 0.042 | 1.53 | 130 |
| C13 | 1.25 | 0 | 1.75 | 129 |
| E2 | 1.25 | 0.042 | 1.75 | 204 |

As shown in Table 1, when the PAM/NAM ratio is as small as that within a range of 1.4 or less, the PSOC life performance is improved to some extent, but the improvement effect is not so high (C1 to C5). This may be because a relatively small PAM/NAM ratio of 1.4 or less reduces the utilization factor of the negative electrode material, so that the reductive reaction easily proceeds during charge in the negative electrode plate, leading to reduction of sulfation. However, the utilization factor of the positive electrode material increases, so that softening of the positive electrode material easily proceeds. In addition, if the PAM/NAM is 1.4 or less, the potential of the negative electrode plate is shifted in a noble direction, so that the hydrogen overvoltage is reduced, and gas generation during charge becomes marked, resulting in increased likelihood of falling of the softened positive electrode material. For this reason, it is considered that the effect of improving PSOC life performance is limited if the PAM/NAM is 1.4 or less.

On the other hand, E1 to E3 has considerably improved PSOC life performance as compared to the corresponding C2 to C4. The reason for this may be as follows. When the positive electrode material contains an Sb element (condition (a)), softening of the positive electrode material is suppressed. According to this, the cause of ending the life of the lead-acid battery changes to stratification. Sb eluted from the positive electrode plate during formation or charge-discharge is deposited on the negative electrode, so that gas is moderately generated during charge. In addition, since the thickness of the positive electrode plate is 1.70 mm or more (condition (b)), a sulfate ion is likely to remain in the positive electrode plate during charge. For this reason, stratification is easily suppressed, and accumulation of lead sulfate and sulfation on the negative electrode plate are suppressed. In addition, when the PAM/NAM ratio is 1.2 to 1.4 (condition (c)), a reductive reaction at the negative electrode plate during charge easily proceeds as described above, so that sulfation is suppressed. In E1 to E3, the PSOC life performance may be considerably improved by suppressing softening of the positive electrode material in the positive electrode plate, and also suppressing stratification and sulfation in the negative electrode plate as described above.

The effects of conditions (a) to (c) on PSOC life performance will be discussed in more detail. First, the effect of decreasing the PAM/NAM ratio from 1.5 to 1.25 is +18% on PSOC life performance (comparison between C1 and C3). The effect of adding an Sb element to the positive electrode material is +24% (comparison between C8 and C9). The effect associated with an increase of thickness of the positive electrode plate is +21% (comparison between C8 and C10). From these results, the PSOC life performance when all of the conditions (a) to (c) are combined is thought to be 163%. However, in practice, a much higher effect of 204% is obtained (E2). Moreover, when the PAM/NAM ratio is 1.5, the effect is low even if all conditions (a) to (c) are combined (C11).

**[Table 2]**

| Battery No. | PAM/NAM | Sb content (% by mass) | Positive electrode thickness (mm) | PSOC life performance (%) |
|---|---|---|---|---|
| C1 | 1.50 | 0 | 1.53 | 100 |
| C13 | 1.25 | 0 | 1.75 | 129 |
| E4 | 1.25 | 0.012 | 1.75 | 182 |
| E2 | 1.25 | 0.042 | 1.75 | 204 |
| E5 | 1.25 | 0.084 | 1.75 | 204 |
| E6 | 1.25 | 0.125 | 1.75 | 204 |
| C14 | 1.25 | 0.042 | 1.53 | 130 |
| C15 | 1.25 | 0.042 | 1.65 | 144 |
| E7 | 1.25 | 0.042 | 1.70 | 204 |
| E2 | 1.25 | 0.042 | 1.75 | 204 |
| C16 | 1.25 | 0 | 1.65 | 125 |
| C17 | 1.25 | 0.012 | 1.65 | 130 |
| C18 | 1.25 | 0.042 | 1.65 | 136 |
| C19 | 1.25 | 0.084 | 1.65 | 140 |
| C20 | 1.25 | 0.125 | 1.65 | 141 |
| C3 | 1.25 | 0 | 1.53 | 118 |
| C16 | 1.25 | 0 | 1.65 | 125 |
| C21 | 1.25 | 0 | 1.70 | 128 |
| C13 | 1.25 | 0 | 1.75 | 129 |

As is apparent from Table 2, high PSOC life performance is obtained (comparison of C14 and C15 with E7 and E2) when the thickness of the positive electrode plate is 1.70 mm or more (condition (b)). If the thickness of the positive electrode plate is less than 1.70 mm (the condition (b) is not satisfied), the effect of improving PSOC life performance is low even when conditions (a) and (c) are satisfied (C16 to C20).

From the viewpoint of easily obtaining higher PSOC life performance, the content of the Sb element in the positive electrode material is preferably 0.01% by mass or more (E2, E4 to E6). If the content of the Sb element reaches a certain level, the effect of improving PSOC life performance hits a peak (E2, E5 and E6). If the positive electrode material does not contain Sb (the condition (a) is not satisfied), the effect of improving PSOC life performance is low even when conditions (b) and (c) are satisfied (comparison C3 and C16 with C21 and C13).

**[Table 3]**

| Battery No. | PAM/NAM | Sb content (% by mass) | Positive electrode thickness (mm) | Graphite content (% by mass) | Ratio Ra | PSOC life performance (%) |
|---|---|---|---|---|---|---|
| C1 | 1.50 | 0 | 1.53 | 0.84 | 0.18 | 100 |
| E2 | 1.25 | 0.042 | 1.75 | 0.84 | 0.18 | 204 |
| E8 | 1.25 | 0.042 | 1.75 | 0.3 | 0.18 | 144 |
| C21 | 1.50 | 0.042 | 1.75 | 0.3 | 0.18 | 116 |
| E9 | 1.25 | 0.042 | 1.75 | 0.84 | 0.27 | 143 |
| C22 | 1.50 | 0.042 | 1.75 | 0.84 | 0.27 | 112 |

As is apparent from Table 3, even when the content of graphite is relatively low, an effect of improving the PSOC life performance is obtained by satisfying conditions (a) to (c) (comparison between E8 and C21). When the content of graphite increases, the effect of the combination of conditions (a) to (c) is easily exhibited, and high PSOC life performance is easily obtained. (comparison between E2 and E8). This may be because the negative electrode plate contains graphite, and thus the negative electrode plate expands during charge-discharge, so that the distance between the electrodes decreases, resulting further suppression of stratification. From such a viewpoint, the content of graphite in the negative electrode material is preferably 0.5% by mass or more, and may be 0.7% by mass or more, or 0.8% by mass or more.

Even if the ratio Ra is relatively large, relatively high PSOC life performance is obtained when conditions (a) to (c) are satisfied (comparison between E9 and C22). When the ratio Ra decreases, the effect of improving PSOC life performance is further enhanced (comparison between E2 and E9). This is because the space occupied by an electrolyte solution on the periphery of the element decreases, so that a downward convection outside the element, which is generated during discharge, is easily blocked, and stratification is suppressed. From the viewpoint of easily securing higher PSOC life performance, the ratio Ra is preferably 0.22 or less, and may be 0.2 or less, or may be 0.18 or less.

### INDUSTRIAL APPLICABILITY

A lead-acid battery according to one aspect of the present invention is suitable for use in a vehicle equipped with an idle reduction system as a lead-acid battery for IS, for example. The lead-acid battery can be suitably used as, for example, a power source for starting a vehicle (automobiles, motorcycles, etc.), and an industrial energy storage apparatus (for example, a power source of an electric vehicle (such as forklift) or the like). These are merely examples, and the application of the lead-acid battery is not limited only to these.

### DESCRIPTION OF REFERENCE SIGNS

1: lead-acid battery
2: negative electrode plate
3: positive electrode plate
4: separator
5: positive electrode shelf
6: negative electrode shelf
7: positive pole
8: penetrating connection body
9: negative pole
11: element
12: container
13: partition
14: cell chamber
15: lid
16: negative electrode terminal
17: positive electrode terminal
18: vent plug

## Claims

1. A lead-acid battery comprising:
at least one element;
an electrolyte solution; and
a cell chamber that houses the element and the electrolyte solution,
wherein
the element includes a negative electrode plate, a positive electrode plate, and a separator interposed between the negative electrode plate and the positive electrode plate,
the positive electrode plate includes a positive electrode material containing an Sb element, and having a thickness of 1.70 mm or more,
the negative electrode plate includes a negative electrode material, and
a mass ratio of the positive electrode material to the negative electrode material is 1.2 or more and 1.4 or less.

2. The lead-acid battery according to claim 1, wherein the content of the Sb element in the positive electrode material is 0.01% by mass or more and 0.5% by mass or less.

3. The lead-acid battery according to claim 1 or 2, wherein the negative electrode material contains graphite.

4. The lead-acid battery according to claim 3, wherein a content of the graphite in the negative electrode material is 0.5% by mass or more.

5. The lead-acid battery according to claim 1 or 2, wherein in a cross section parallel to a bottom part of the cell chamber of the lead-acid battery in a lower part of the lead-acid battery, a ratio Ra (= Se/Sg) of a cross-sectional area Se of the electrolyte solution present between outer edges of the element and inner edges of the cell chamber housing the element to a cross-sectional area Sg of the element is 0.27 or less.

6. The lead-acid battery according to claim 5, wherein in a cross section parallel to a bottom part of the cell chamber of the lead-acid battery in a lower part of the lead-acid battery, the ratio Ra (= Se/Sg) of a cross-sectional area Se of the electrolyte solution present between outer edges of the element and inner edges of the cell chamber housing the element to a cross-sectional area Sg of the element is 0.22 or less.

7. The lead-acid battery according to claim 5, wherein in a cross section parallel to a bottom part of the cell chamber of the lead-acid battery in a lower part of the lead-acid battery, the ratio Ra (= Se/Sg) of a cross-sectional area Se of the electrolyte solution present between outer edges of the element and inner edges of the cell chamber housing the element to a cross-sectional area Sg of the element is 0.1 or more.

8. The lead-acid battery according to any one of claims 5 to 7, wherein a ratio Rb (= Ss/Se × 100) of a total Ss of cross-sectional areas occupied by the electrolyte solution to the cross-sectional area Se is 80% or more in a portion located between each of outer edges of the element at both side end parts of the element and an inner edge of the cell chamber facing each of the outer edges.

9. The lead-acid battery according to any one of claims 5 to 7, wherein the ratio Rb (= Ss/Se × 100) of a total Ss of cross-sectional areas occupied by the electrolyte solution to the cross-sectional area Se is 85% or more in a portion located between each of outer edges of the element at both side end parts of the element and an inner edge of the cell chamber facing each of the outer edges.
